# EUROPEAN PATENT APPLICATION

(11) **EP 3 406 926 A1**
(43) Date of publication of application: **28.11.2018**
(21) Application number: 17756858.1
(22) Date of filing: 24.02.2017
(51) Int. Cl.: F16D 3/205, F16D 3/22, F16D 3/223

(54) **TRIPOD CONSTANT-VELOCITY JOINT**

(30) Priority: 26.02.2016 KR 20160023208
(71) Applicant: erae AMS Co., Ltd., Daegu 42981 (KR)
(72) Inventor: LEE, Young-Doo, Dalseong-gun Daegu 42981 (KR); LEE, Hyun-Il, Dalseong-gun Daegu 42981 (KR); JEONG, Jae-Seung, Dalseong-gun Daegu 42981 (KR); LEE, Jang-Sun, Dalseong-gun Daegu 42981 (KR)
(74) Representative: Manitz Finsterwald Patentanwälte PartmbB
(86) International application number: PCT/KR2017/002058
(87) International publication number: WO 2017/146520

(57) **Abstract**

A tripod constant velocity joint includes: a spider having a plurality of trunnions; a plurality of roller assemblies which are respectively assembled to the plurality of the trunnions; and a housing defining a plurality of track grooves which respectively receive the plurality of roller assemblies. The respective roller assembly includes: an inner roller which is coupled to the trunnion; an outer roller which is disposed to surround the inner roller; a needle roller which is interposed between the inner roller and the outer roller; and an elastic member which elastically supports the outer roller outwardly in a radial direction with respect to the inner roller.

## Description

### [Technical Field]

The present invention relates to a tripod constant velocity joint for vehicles.

### [Background Art]

A drive shaft assembly is interposed between a transmission and a driving wheel of a vehicle to transmit a driving force.

The drive shaft assembly includes a drive shaft and two constant velocity joints which are respectively disposed on both ends thereof. The constant velocity joint which is disposed at a side toward the transmission is called an inboard joint and the constant velocity joint which is disposed at a side toward the driving wheel is called an outboard joint, and a tripod constant velocity joint which allows an axial displacement is generally used as the inboard constant velocity joint.

The tripod constant velocity joint includes a spider having three trunnions, roller assemblies which are respectively assembled to the trunnions, and a housing which receives the roller assemblies.

Various roller assemblies of different structures have been introduced, and as an example, a roller assembly which is composed of an inner roller, an outer roller and a needle roller which is interposed therebetween has been introduced.

In such a tripod constant velocity joint, vibration and noise may occur due to a clearance between the roller assembly and the housing. In particular, as an articulation angle becomes larger, vibration and noise may easily occur due to the clearance between the housing and the roller assembly.

### [Detailed Description of the Invention]

### [Technical Problem]

The present invention has been made in an effort to provide a tripod constant velocity joint which can reduce a vibration and a noise which may occur due a clearance between a roller assembly and a housing.

### [Technical Solution]

A tripod constant velocity joint according to an embodiment of the present invention includes: a spider having a plurality of trunnions; a plurality of roller assemblies which are respectively assembled to the plurality of the trunnions; and a housing defining a plurality of track grooves which respectively receive the plurality of roller assemblies. The respective roller assembly includes: an inner roller which is coupled to the trunnion; an outer roller which is disposed to surround the inner roller; a needle roller which is interposed between the inner roller and the outer roller; and an elastic member which elastically supports the outer roller outwardly in a radial direction with respect to the inner roller.

The inner roller and the outer roller may have a shape of being perforated in a radial direction. A supporting protrusion may be formed at an inner side of an outward end in a radial direction of the outer roller, and the elastic member may be disposed in a state of being elastically compressed between an outer end of the inner roller in a radial direction and the supporting protrusion so as to elastically support the outer roller with respect to the inner roller.

The inner roller and the outer roller may have a shape of being perforated in a radial direction. A retainer may be connected to an outer end in a radial direction of the outer roller, and the elastic member may be disposed in a state of being elastically compressed between an outer end of the inner roller in a radial direction and the retainer so as to elastically support the outer roller with respect to the inner roller.

A contact portion of the outer roller contacting a bottom surface of the track groove of the housing may have a rounded shape.

A side surface of the outer roller may have an outwardly convex shape, and a maximum protrusion point of the side surface of the outer roller may be inwardly offset from a center of a whole length of the outer roller in a radial direction.

An outer surface of the trunnion may be a convex curved surface, and an inner surface of the inner roller may be a concave curved surface. The inner roller and the outer roller may be relatively movable in a radial direction of the spider with respect to one another.

### [Advantageous Effects]

According to the present invention, since the outer roller is elastically supported outwardly in a radial direction with respect to the inner roller, a clearance between the outer roller and the bottom surface of the track groove of the housing can be reduced so that noise and vibration during an operation of the joint can be reduced.

### [Brief Description of the Drawings]

FIG. 1 is a schematic perspective view of a tripod constant velocity joint according to an embodiment of the present invention.
FIG. 2 is a side elevational view of a tripod constant velocity joint according to an embodiment of the present invention.
FIG. 3 is a sectional view taken along a line III-III in FIG. 1.
FIG. 4 is a sectional view of a tripod constant velocity joint according to another embodiment of the present invention.
FIG. 5 is a sectional view of a tripod constant velocity joint according to yet another embodiment of the present invention.

### [Detailed Description of the Embodiments]

Embodiments of the present invention will be described in detail hereinafter with reference to the accompanying drawings.

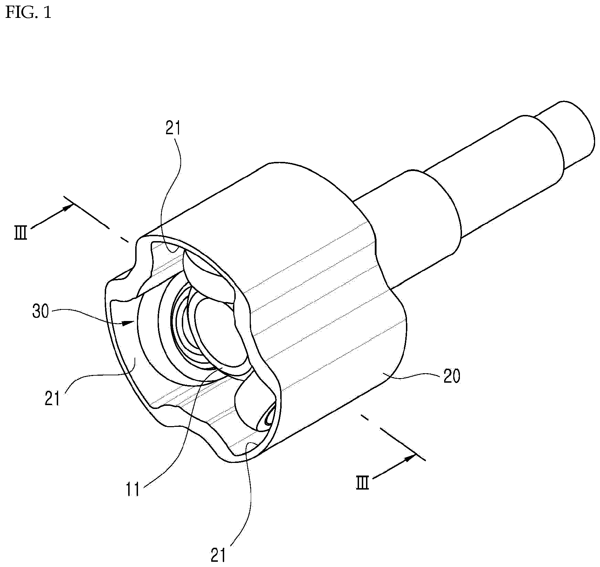

Referring to FIG. 1, the tripod constant velocity joint includes a spider 10 and a housing 20.

The spider 10 may be connected to a drive shaft (not shown). The spider 10 may include a spider body 11 which has a through hole at a center thereof, and the drive shaft of a vehicle may be inserted into the through hole to be coupled therewith. For example, the spider 10 may be splined to the drive shaft. Accordingly, an output power of a transmission may be transmitted to a driving wheel via the tripod constant velocity joint.

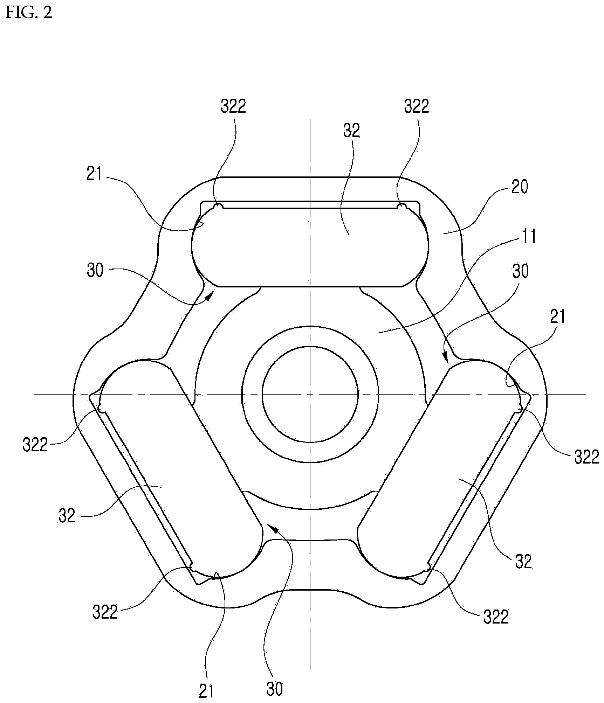

Referring to FIG. 2, the spider 10 may include a plurality of trunnions 12 which are protruded in a radial direction from the body 11. At this time, the trunnions 12 may be provided in three, and three trunnions 12 may be equidistantly disposed along a circumferential direction. Here, the radial direction means the radial direction of the spider 10, and the radial direction which will be used below indicates the same direction.

A plurality of roller assemblies 30 are respectively coupled to the plurality of the trunnions 12, and the housing 20 includes a plurality of track grooves 21 which respectively receive the plurality of the roller assemblies 30. The roller assembly 30 is assembled to the trunnion 12 of the spider 10 and plays a role of transmitting power between the housing 20 and the spider 10.

The roller assembly 30 may include an inner roller 31, an outer roller 32, a needle roller 33 and an elastic member 34.

The inner roller 31 is coupled to the trunnion 12. The inner roller 31 has a shape of being penetrated along the radial direction, and an inner surface along a width direction faces the side surface of the trunnion 12. The inner surface of the inner roller 31 along the width direction may have a concave curved surface, and the inner surface of the inner roller 31 along the width direction may be configured to form a line contact or a surface contact with the side surface of the trunnion 12.

The outer roller 32 is disposed and configured to surround the inner roller 31. The outer roller 32 has a shape of being penetrated along the radial direction and an outer surface thereof along a width direction faces the side surface of the track groove 21 of the housing 20. The outer surface of the outer roller 32 along the width direction may be configured to form a line contact or a surface contact with the side surface of the track groove 21 of the housing 20.

The needle roller 33 is interposed between the inner roller 31 and the outer roller 32. The needle roller 33 may be disposed to contact the inner roller 31 and the outer roller 32 respectively, and as shown in the drawing protrusion portions 311 and 312 which are respectively formed at an inner radial end and an outer radial end of the inner roller 31 may restrain the needle roller 33 along the radial direction.

The elastic member 34 is disposed between the inner roller 31 and the outer roller 32 in a compressed state so as to elastically support the outer roller 32 with respect to the inner roller 31 outwardly in a radial direction. That is, the outer roller 32 is urged to move outwardly in a radial direction by the elastic member 34, and accordingly a clearance between the outer roller 32 and the bottom surface of the track groove 21 is decreased. The decrease of the clearance between the housing 20 and the roller assembly 30 leads the decrease of vibration during power transmission. Also, a stroke load between the housing 20 and the roller assembly 30 can be regulated by regulating the elastic force of the elastic member 34. For example, the elastic member 34 may be a coil spring or a leaf spring. Further, since the inner roller 31 and the outer roller 32 which are relatively movable in a radial direction with respect to one anther are supported by the elastic member 34, the inner roller 31 is urged to move inwardly in a radial direction while the outer roller 32 is urged to move outwardly in a radial direction so that the clearance between the inner roller 31 and the trunnion 12 can also be absorbed.

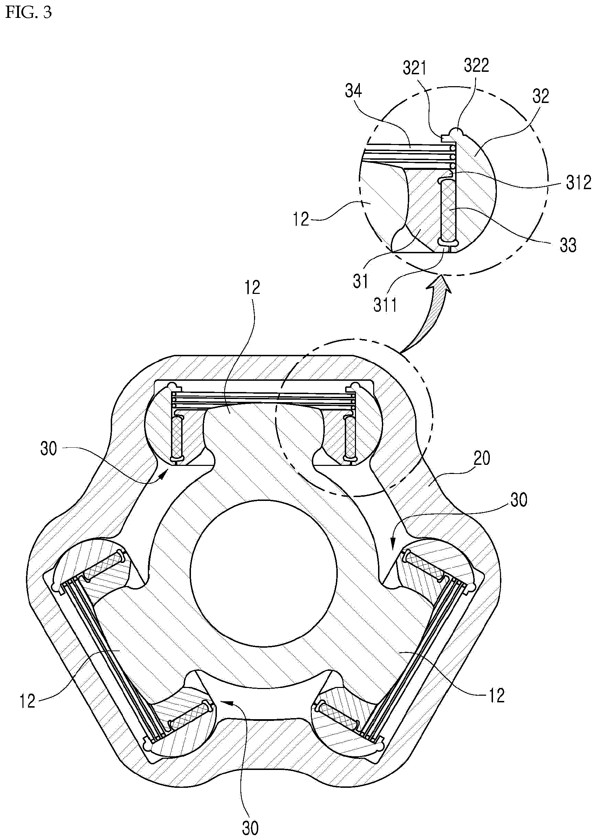

Referring to FIG. 3, a supporting protrusion 321 is provided at a radial outer end of the outer roller 32 and the elastic member 34 may elastically support the outer roller 32 by being disposed in a state of being elastically compressed between a radial outer end of the inner roller 31 and the supporting protrusion 321.

Meanwhile, a contact portion 322 of the outer roller 32 which may contact the bottom surface of the track groove 21 of the housing 20 may have a rounded shape. At this time, the contact portion 322 may be formed as a protrusion protruded in a radial direction, and may be spaced away from the bottom surface of the track groove 21 of the hosing 20 in a normal operation and may contact the bottom surface of the track groove 21 of the housing 20 during an operation in an articulated state. Since the contact portion 322 is protruded in a rounded shape, the friction between the outer roller 32 and the housing 20 can be reduced.

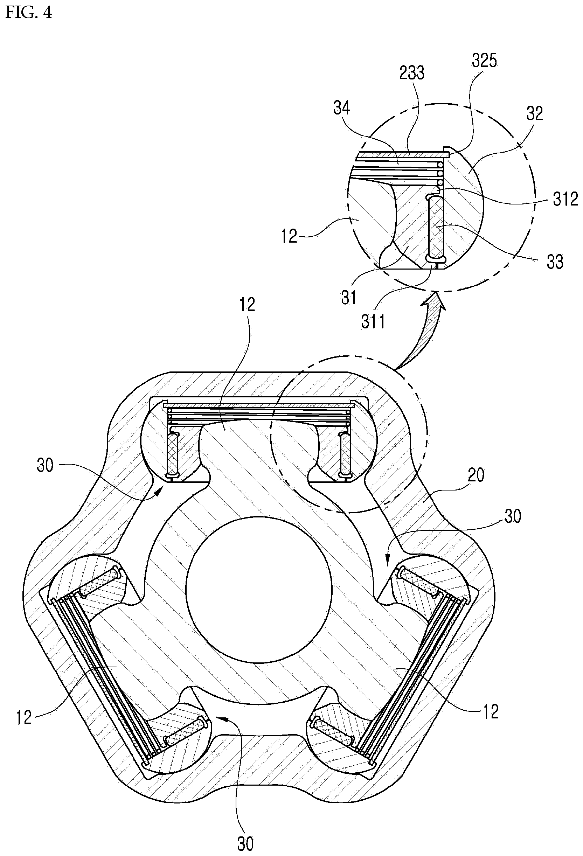

Meanwhile, referring to FIG. 4, according to another embodiment of the present invention, a retainer 233 is connected to an end of the outer roller 32 in an outward radial direction, and the elastic member 34 is disposed in a state of being elastically compressed between the outward radial end of the inner roller 31 and the retainer 233 to elastically support the outer roller 32 with respect to the inner roller 31. At this time, the retainer 233 may be connected to the outer roller 32 by being inserted into a coupling groove 325 which is formed in the outer roller 32.

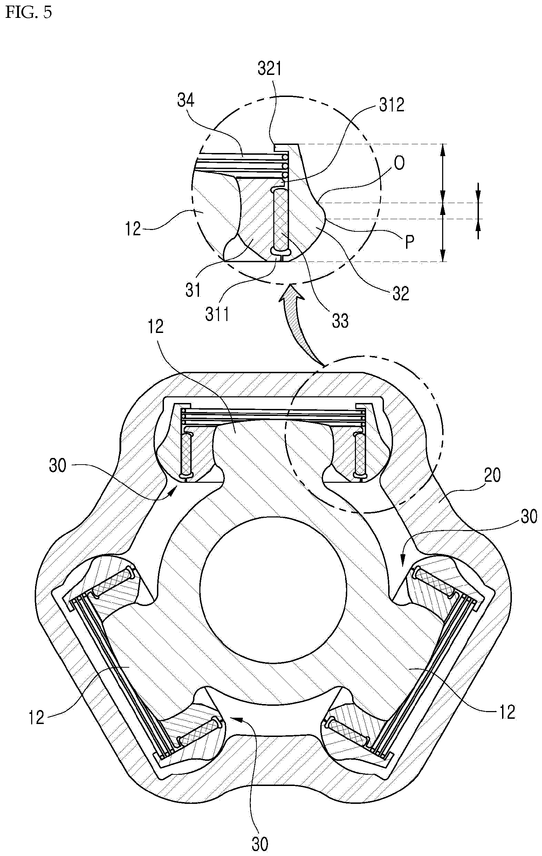

Meanwhile, referring to FIG. 5, an outer surface of the outer roller 32 in a width direction may have a convex shape, and at this time a point of maximum protrusion point P in a width direction of the outer roller 32 may be inwardly offset from a center point O of a whole length of the outer roller 32 in a radial direction. That is, referring to FIG. 5, the maximum protrusion point P of the outer roller 32 is offset by a predetermined distance inwardly in a radial direction from the center O of the while radial length.

While this invention has been described in connection with what is presently considered to be practical exemplary embodiments, it is to be understood that the invention is not limited to the disclosed embodiments, but, on the contrary, is intended to cover various modifications and equivalent arrangements included within the spirit and scope of the appended claims.

### [Industrial Applicability]

The present invention may be applied to a part of a drive line of a vehicle, so it has an industrial applicability.

## Claims

1. A tripod constant velocity joint comprising:
a spider having a plurality of trunnions;
a plurality of roller assemblies which are respectively assembled to the plurality of the trunnions; and
a housing defining a plurality of track grooves which respectively receive the plurality of roller assemblies,
wherein the respective roller assembly comprises:
an inner roller which is coupled to the trunnion;
an outer roller which is disposed to surround the inner roller;
a needle roller which is interposed between the inner roller and the outer roller; and
an elastic member which elastically supports the outer roller outwardly in a radial direction with respect to the inner roller.

2. The tripod constant velocity joint of claim 1, wherein the inner roller and the outer roller have a shape of being perforated in a radial direction, and wherein a supporting protrusion is formed at an inner side of an outward end in a radial direction of the outer roller, and wherein the elastic member is disposed in a state of being elastically compressed between an outer end of the inner roller in a radial direction and the supporting protrusion so as to elastically support the outer roller with respect to the inner roller.

3. The tripod constant velocity joint of claim 1, wherein the inner roller and the outer roller have a shape of being perforated in a radial direction, and wherein a retainer is connected to an outer end in a radial direction of the outer roller, and wherein the elastic member is disposed in a state of being elastically compressed between an outer end of the inner roller in a radial direction and the retainer so as to elastically support the outer roller with respect to the inner roller.

4. The tripod constant velocity joint of claim 1, wherein a contact portion of the outer roller contacting a bottom surface of the track groove of the housing has a rounded shape.

5. The tripod constant velocity joint of claim 1, wherein a side surface of the outer roller has an outwardly convex shape, and wherein a maximum protrusion point of the side surface of the outer roller is inwardly offset from a center of a whole length of the outer roller in a radial direction.

6. The tripod constant velocity joint of claim 1, wherein an outer surface of the trunnion is a convex curved surface, and wherein an inner surface of the inner roller is a concave curved surface, and wherein the inner roller and the outer roller are relatively movable in a radial direction of the spider with respect to one another.
